# EUROPÄISCHE PATENTSCHRIFT

(11) **EP 3 666 544 B1**
(45) Veröffentlichungstag und Bekanntmachung des Hinweises auf die Patenterteilung: **25.05.2022**
(21) Anmeldenummer: 19214543.1
(22) Anmeldetag: 09.12.2019
(51) Int. Cl.: B60B 37/04, B60B 27/06, B60B 17/00, B60B 3/14

(54) **RADSATZ FÜR EIN SCHIENENFAHRZEUG**
WHEEL SET FOR A RAIL VEHICLE
ESSIEU MONTÉ POUR UN VÉHICULE FERROVIAIRE

(30) Priorität: 12.12.2018 AT 511012018
(43) Veröffentlichungstag der Anmeldung: 17.06.2020
(73) Patentinhaber: Siemens Mobility Austria GmbH, 1210 Wien (AT)
(72) Erfinder: Boronkai, Laszlo, 8101 Gratkorn (AT); Jansky, Harald, Sacramento, CA 95825 (US)
(74) Vertreter: Deffner, Rolf

(56) Entgegenhaltungen:
- EP-A1- 3 560 729
- CN-U- 2 088 052
- CN-U- 202 368 267
- CN-U- 202 911 466
- DE-C- 948 609
- GB-A- 239 931
- GB-A- 403 076
- GB-A- 1 443 767
- PL-A1- 397 318

## Beschreibung

Die Erfindung betrifft einen Radsatz für ein Schienenfahrzeug, mit zumindest einer Radsatzwelle sowie mit einem ersten Rad und einem zweiten Rad.

Zwischen Rädern und Radsatzwellen von Schienenfahrzeugen sind häufig Längspresssitze vorgesehen. Derartig mit Radsatzwellen verbundene Räder müssen für bestimmte Wartungs- und Instandhaltungsmaßnahmen (z.B. für einen Tausch von Rädern, wenn diese entsprechende Verschleiß-Betriebsgrenzmaße erreicht haben) von den Radsatzwellen ab- und aufgepresst werden. Für ein Abpressen eines verschlissenen Rads eines Radsatzes eines Fahrwerks von einer Radsatzwelle und eines Aufpressens eines neuen Rads auf die Radsatzwelle muss der Radsatz aus dem Fahrwerk ausgebaut werden, weshalb ein Rädertausch einen besonders hohen Demontage- und Montageaufwand erfordert bzw. einen großen Zeitbedarf aufweist.

Aus dem Stand der Technik ist beispielsweise die RU 91 703 U1 bekannt, in welcher ein Radsatz mit Rädern und einer Radsatzwelle, wobei zwischen den Rädern und der Radsatzwelle Presssitze vorgesehen sind, dargestellt ist.

Dieser Ansatz weist in seiner bekannten Form den Nachteil auf, dass zur Demontage und Montage der Räder Ab- und Aufpressvorgänge erforderlich sind.

Die CN 2 088 052 U und die CN 202 911 466 U zeigen Vorrichtungen zur kraftschlüssigen Verbindung zwischen Radsatzwellen und Rädern.

Ferner offenbart die GB 1 443 767 A ein Rad und eine Welle, wobei in eine Bohrung einer Radnabe eine Hülse mittels Schrumpfung eingesetzt ist und das Rad über die Hülse auf die Welle aufgeschrumpft ist.

Darüber hinaus sind in der später veröffentlichten EP 3 560 729 A1 ein Rad und eine Welle für ein Fahrzeug dargestellt, wobei das Rad in einer Mittenbohrung und die Welle an ihrer Mantelfläche gerundete Ausnehmungen aufweisen. Die Ausnehmungen des Rads sind mit jenen der Welle zur Deckung gebracht. In die Ausnehmungen sind Bolzen einpresst, wodurch das Rad mit der Welle verbunden ist.

Weiterhin zeigt die WO 2018/197581 A1 ein Rad für Schienenfahrzeuge, bei welchem zwischen einer Radnabe und einem Radkörper, der einen Radsteg und einen Spurkranz aufweist, eine Verzahnung angeordnet ist. Zwischen der Radnabe und einer Radsatzwelle ist ein zylindrischer Presssitz vorgesehen.

Dieser Ansatz weist in seiner bekannten Form den Nachteil auf, dass zwar der Radkörper mit geringem Aufwand von der Radnabe gelöst bzw. mit dieser verbunden werden kann, jedoch für eine Demontage und Montage der Radnabe von und auf der Radsatzwelle Presswerkzeuge erforderlich sind.

Der Erfindung liegt daher die Aufgabe zugrunde, einen gegenüber dem Stand der Technik weiterentwickelten Radsatz anzugeben, bei welchem ein Rädertausch einen besonders geringen Aufwand erfordert.

Erfindungsgemäß wird diese Aufgabe gelöst mit einem Radsatz der eingangs genannten Art, bei dem zumindest zwischen dem ersten Rad und der zumindest einen Radsatzwelle ein erstes Spannelement angeordnet ist, mittels welchem das erste Rad lösbar mit der zumindest einen Radsatzwelle verbunden ist. Dadurch wird ein Demontage- und Montageaufwand des ersten Rads reduziert. Ist der erfindungsgemäße Radsatz mit einem Fahrwerk eines Schienenfahrzeugs verbunden, so ist für eine Demontage bzw. Montage des ersten Rads von der bzw. auf die Radsatzwelle kein Ausbau bzw. Einbau des Radsatzes aus dem bzw. in das Fahrwerk notwendig. Weiterhin sind zur Demontage bzw. Montage des ersten Rads von der bzw. auf die Radsatzwelle keine Radsatzpressvorrichtungen erforderlich, weshalb eine Radsatzmontage-Infrastruktur einfach ausgeführt sein kann.

Aufgrund des verringerten Demontage- und Montageaufwands für das erste Rad verringert sich ein Zeitbedarf für einen Rädertausch an einem innengelagerten Fahrwerk von ca. 210 min auf ca. 45 min.

Weiterhin werden durch einen Entfall von Ab- bzw. Aufpressvorgängen des ersten Rads von der bzw. auf die Radsatzwelle Risiken in Bezug auf eine mögliche Beschädigung der Radsatzwelle aufgrund der Ab- und Aufpressvorgänge gesenkt.

Ferner können aufgrund des ersten Spannelements Anforderungen an Oberflächengüten und Toleranzen der Radsatzwelle und des ersten Rads geringer angesetzt werden als dies für Pressverbände zwischen Radsatzwellen und Rädern vorgesehen sein muss.

Eine vorteilhafte Lösung wird erzielt, wenn das erste Spannelement einen Rücksprung bezüglich einer Radnaben-Stirnseite bildend auf der zumindest einen Radsatzwelle angeordnet ist.

Durch diese Maßnahme sind aus dem ersten Spannelement ragende Spanneinrichtungen (z.B. Schrauben mit ihren Schraubenköpfen) vor mechanischen Einwirkungen und Beschädigungen geschützt.

Es ist günstig, wenn das erste Spannelement als integraler Teil des ersten Rads ausgebildet ist.

Durch diese Maßnahme wird eine zusätzliche Demontage- und Montageerleichterung des ersten Rads von und auf der Radsatzwelle erzielt.

Eine vorteilhafte Ausgestaltung erhält man, wenn das erste Spannelement und die zumindest eine Radsatzwelle stirnseitig mittels einer lösbar mit der zumindest einen Radsatzwelle, mit dem ersten Rad oder mit dem ersten Spannelement verbundenen Endkappe abgeschirmt sind.

Durch diese Maßnahme wird ein Schutz des ersten Spannelements und der Radsatzwelle vor Umgebungseinflüssen (Feuchtigkeit, Spritzwasser, Eis, Schnee und Partikel etc.) erzielt. Dieser Schutz ist insbesondere dann günstig, wenn die Radsatzwelle als Hohlwelle ausgebildet ist.

Nachfolgend wird die Erfindung anhand von Ausführungsbeispielen näher erläutert.

Es zeigen beispielhaft:
- Fig. 1:: Einen Seitenriss einer ersten beispielhaften Ausführungsvariante eines erfindungsgemäßen Radsatzes in Schnittdarstellung, bei welchem zwischen einem ersten Rad und einer Radsatzwelle ein erstes Spannelement vorgesehen ist, und
- Fig. 2:: Einen Seitenriss einer zweiten beispielhaften Ausführungsvariante eines erfindungsgemäßen Radsatzes in Schnittdarstellung, bei welchem zwischen einem ersten Rad und einer Radsatzwelle ein erstes Spannelement vorgesehen ist, wobei die Radsatzwelle und das erste Spannelement stirnseitig mittels einer Endkappe abgedeckt sind.

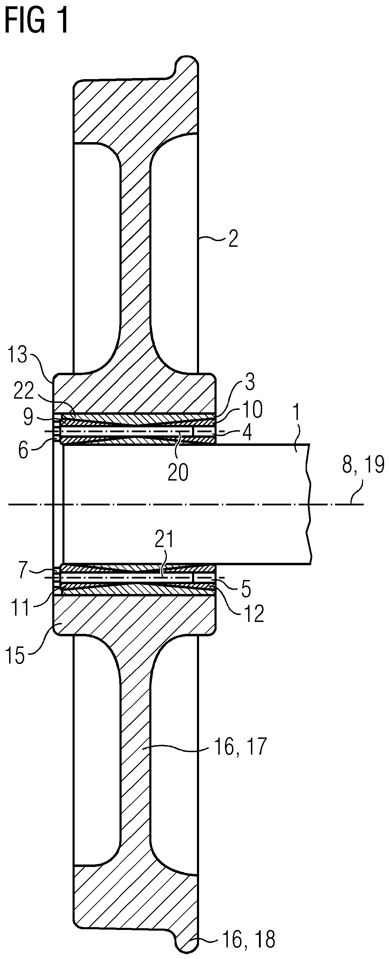

Fig. 1 zeigt einen Seitenriss eines Ausschnitts aus einer ersten beispielhaften Ausführungsvariante eines erfindungsgemäßen Radsatzes eines Schienenfahrzeugs in geschnittener Darstellung. Der Radsatz weist eine Radsatzwelle 1 sowie ein erstes Rad 2 und ein nicht dargestelltes zweites Rad auf, welche mit der Radsatzwelle 1 verbunden sind.

Weiterhin sind mit der Radsatzwelle 1 ein erstes Radsatzlager mit einem ersten Radsatzlagergehäuse und ein zweites Radsatzlager mit einem zweiten Radsatzlagergehäuse, welche nicht gezeigt sind, verbunden. Das erste Radsatzlager und das zweite Radsatzlager sind innerhalb eines von dem ersten Rad 2 und dem zweiten Rad begrenzten Bereichs auf der Radsatzwelle 1 angeordnet.

Über das erste Radsatzlagergehäuse und das zweite Radsatzlagergehäuse ist der Radsatz mit einem nicht dargestellten Fahrwerksrahmen eines innengelagerten Fahrwerks des Schienenfahrzeugs gekoppelt.

Das erste Rad 2 umfasst eine Radnabe 15 sowie einen Radkörper 16, welcher einen Radsteg 17 sowie einen Spurkranz 18 aufweist.

Zwischen der Radsatzwelle 1 und dem ersten Rad 2 ist ein zylindrisches erstes Spannelement 3 angeordnet. Dieses erste Spannelement 3 weist eine Spannelement-Längsachse 8 auf, welche in einer Radsatz-Längsachse 19 verläuft. In einer ersten Bohrung 4 des ersten Spannelements 3 ist eine erste Schraube 6, welche als Sechskantschraube ausgebildet ist, angeordnet. Um die erste Schraube 6 sind eine erste Keilhülse 9 und eine zweite Keilhülse 10 angeordnet. Eine erste Schrauben-Längsachse 20 verläuft parallel zu der Spannelement-Längsachse 8 bzw. zu der Radsatz-Längsachse 19. In einer zweiten Bohrung 5 des ersten Spannelements 3 ist eine zweite Schraube 7, welche als Sechskantschraube ausgebildet ist, angeordnet. Um die zweite Schraube 7 sind eine dritte Keilhülse 11 und eine vierte Keilhülse 12 angeordnet. Eine zweite Schrauben-Längsachse 21 verläuft parallel zu der Spannelement-Längsachse 8 bzw. zu der Radsatz-Längsachse 19.

In nicht sichtbaren weiteren Bohrungen bzw. weiteren Keilhülsen des ersten Spannelements 3 sind nicht sichtbare weitere Schrauben vorgesehen.

Insgesamt weist das erste Spannelement 3 zwölf Bohrungen und Schrauben sowie vierundzwanzig Keilhülsen auf, welche konstruktiv entsprechend der erste Bohrung 4, der ersten Schraube 6, der ersten Keilhülse 9 sowie der zweiten Keilhülse 10 ausgeführt sind und entlang eines Umfangs einer Stirnfläche des ersten Spannelements 3 auf bzw. in dem ersten Spannelement 3 angeordnet sind.

Das erste Spannelement 3 ist in die Radnabe 15 des ersten Rads 2 eingepresst und, vor einem Anziehen der ersten Schraube 6, der zweiten Schraube 7 und der weiteren Schrauben, mit dem ersten Rad 2 auf die Radsatzwelle 1 aufgeschoben bzw. verschiebbar auf der Radsatzwelle 1 angeordnet, wobei zwischen der Radsatzwelle 1 und dem ersten Spannelement 3 eine Übergangspassung vorgesehen ist. Für ein Aufschieben des ersten Spannelements 3 auf die Radsatzwelle 1 ist daher keine Radsatzpresse erforderlich.

Die Radsatzwelle 1 weist einen entsprechenden, nicht dargestellten Sitz, bzw. eine Schulter auf, um das erste Spannelement 3 mit dem ersten Rad 2 auf der Radsatzwelle 1 zu positionieren. Das erste Spannelement 3 ist, bezogen auf eine Radnaben-Stirnseite 13, in Richtung einer Radsatzmitte versetzt angeordnet, d.h. bildet bezüglich der Radnaben-Stirnseite 13 einen Rücksprung, wodurch Schraubenköpfe der ersten Schraube 6, der zweiten Schraube 7 und der weiteren Schrauben vor Beschädigungen geschützt sind.

Die erste Bohrung 4, die zweite Bohrung 5, die weiteren Bohrungen sowie die erste Keilhülse 9, die zweite Keilhülse 10, die dritte Keilhülse 11, die vierte Keilhülse 12 und die weiteren Keilhülsen weisen nicht gezeigte Innengewinde auf, über welche die erste Schraube 6, die zweite Schraube 7 sowie die weiteren Schrauben in einem in Fig. 1 gezeigten Montagezustand in dem ersten Spannelement 3 angezogen sind. Dadurch bzw. aufgrund einer entsprechenden Keilwirkung ist das erste Spannelement 3 mit der Radsatzwelle 1 und dem ersten Rad 2 verspannt. Aufgrund eines entsprechenden Fugendrucks zwischen dem ersten Spannelement 3 und der Radsatzwelle 1 einerseits sowie dem ersten Rad 2 andererseits erfolgt eine sichere Momenten- und Kraftübertragung zwischen der Radsatzwelle 1 und dem ersten Rad 2.

Aufgrund des ersten Spannelements 3 ist das erste Rad 2 lösbar mit der Radsatzwelle 1 verbunden. Für ein Lösen des ersten Spannelements 3 bzw. des ersten Rads 2 müssen lediglich die erste Schraube 6, die zweite Schraube 7 sowie die weiteren Schrauben gelöst werden. Danach können das erste Rad 2 und das erste Spannelement 3 von der Radsatzwelle 1 abgezogen werden, wofür wiederum keine Radsatzpresse erforderlich ist.

In jener in Fig. 1 dargestellten ersten Ausführungsvariante eines erfindungsgemäßen Radsatzes ist das erste Spannelement 3 in das erste Rad 2 eingepresst, d.h. kraftschlüssig mit dem ersten Rad 2 verbunden. Erfindungsgemäß ist es jedoch auch vorstellbar, dass das erste Spannelement 3 bzw. ein Außenring 22 des ersten Spannelements 3 stoffschlüssig mit dem ersten Rad 2 bzw. der Radnabe 15 verbunden ist. Weiterhin ist es denkbar, das erste Spannelement 3 bzw. dessen Außenring 22 als integralen Teil des ersten Rads 2 bzw. der Radnabe 15 auszubilden, d.h. das erste Rad 2 und das erste Spannelement 3 einstückig auszuführen.

Das erste Rad 2 ist als einstückiges Vollrad ausgebildet. Erfindungsgemäß kann das erste Rad jedoch auch als Radreifen-Rad oder als Rad, bei welchem der Radkörper 16 von der Radnabe 15 lösbar ist (z.B. über eine Verzahnung zwischen dem Radkörper 16 und der Radnabe 15) etc. ausgeführt sein.

Zwischen der Radsatzwelle 1 und dem zweiten Rad ist ein nicht gezeigtes zweites Spannelement vorgesehen, welches konstruktiv, funktional, sowie im Hinblick auf seine Verbindungstechnik gleich wie das erste Spannelement 3 ausgebildet ist.

Fig. 1 zeigt einen Radsatz mit durchgehender Verbindung zwischen dem ersten Rad 2 und dem zweiten Rad. Erfindungsgemäß ist es jedoch auch vorstellbar, dass der Radsatz in einer Weise ausgebildet ist, dass eine erste Radsatzwelle mit dem ersten Rad 2 in einer ersten Achsbrücke oder einem ersten Radkasten des Schienenfahrzeugs drehbar gelagert ist und eine zweite Radsatzwelle mit dem zweiten Rad in einer zweiten Achsbrücke oder einem zweiten Radkasten des Schienenfahrzeugs, wobei zwischen der ersten Radsatzwelle und dem ersten Rad 2 das erste Spannelement 3 angeordnet ist und zwischen der zweiten Radsatzwelle und dem zweiten Rad das zweite Spannelement.

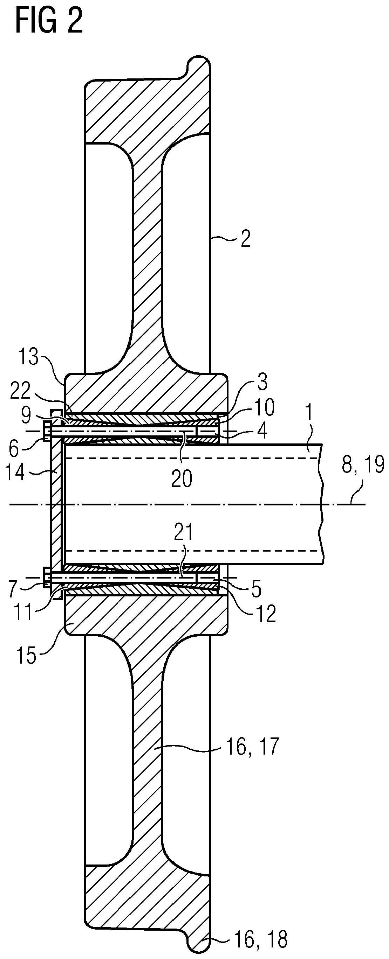

Eine in Fig. 2 als Seitenriss geschnitten und ausschnittsweise dargestellte zweite beispielhafte Ausführungsvariante eines erfindungsgemäßen Radsatzes ist konstruktiv und funktional ähnlich jener ersten beispielhaften Ausführungsvariante, welche in Fig. 1 gezeigt ist, ausgebildet. Es werden daher weitgehend gleiche Bezugszeichen verwendet.

Im Unterschied zu der ersten beispielhaften Ausführungsvariante eines erfindungsgemäßen Radsatzes von Fig. 1 zeigt Fig. 2 einen Radsatz, welcher eine als Hohlwelle ausgebildete Radsatzwelle 1 aufweist. Zwischen der Radsatzwelle 1 und einem ersten Rad 2 ist ein erstes Spannelement 3 angeordnet und mit der Radsatzwelle 1 sowie mit dem ersten Rad 2 mittels einer ersten Schraube 6, einer zweiten Schraube 7 sowie weiterer Schrauben verspannt.

Das erste Spannelement 3 schließt bündig mit einer Radnaben-Stirnseite 13 ab und ist von einer Endkappe 14 abgedeckt. Die Endkappe 14 ist mittels der ersten Schraube 6, der zweiten Schraube 7 sowie der weiteren Schrauben mit dem ersten Spannelement 3 verschraubt und somit lösbar mit dem ersten Spannelement 3 verbunden. Zwischen der Endkappe 14 und dem ersten Spannelement 3 ist eine nicht dargestellte Gummidichtung vorgesehen.

Erfindungsgemäß ist es jedoch auch vorstellbar, dass das erste Spannelement 3 bezüglich der Radnaben-Stirnseite 13 in Richtung einer Radsatzmitte versetzt angeordnet ist und zwischen dem ersten Spannelement 3 und der Endkappe 14 Distanzhülsen vorgesehen sind.

Erfindungsgemäß ist es weiterhin vorstellbar, dass die Endkappe 14 anstatt mit dem ersten Spannelement 3 beispielsweise mit dem ersten Rad 2 oder mit der Radsatzwelle 1 verbunden (z.B. verschraubt) ist.

Die Endkappe 14 schirmt das erste Spannelement 3 sowie die Radsatzwelle 1 stirnseitig ab, wobei es erfindungsgemäß denkbar ist, dass sich die Endkappe 14 auch über das erste Rad 2 erstreckt.

### Liste der Bezeichnungen

- 1: Radsatzwelle
- 2: Erstes Rad
- 3: Erstes Spannelement
- 4: Erste Bohrung
- 5: Zweite Bohrung
- 6: Erste Schraube
- 7: Zweite Schraube
- 8: Spannelement-Längsachse
- 9: Erste Keilhülse
- 10: Zweite Keilhülse
- 11: Dritte Keilhülse
- 12: Vierte Keilhülse
- 13: Radnaben-Stirnseite
- 14: Endkappe
- 15: Radnabe
- 16: Radkörper
- 17: Radsteg
- 18: Spurkranz
- 19: Radsatz-Längsachse
- 20: Erste Schrauben-Längsachse
- 21: Zweite Schrauben-Längsachse
- 22: Außenring

## Patentansprüche

1. Radsatz für ein Schienenfahrzeug, mit zumindest einer Radsatzwelle (1) sowie mit einem ersten Rad (2) und einem zweiten Rad, wobei zumindest zwischen dem ersten Rad (2) und der zumindest einen Radsatzwelle (1) ein erstes Spannelement (3) angeordnet ist, mittels welchem das erste Rad (2) lösbar mit der zumindest einen Radsatzwelle (1) verbunden ist, wobei das erste Spannelement (3) mittels einer in einer ersten Bohrung (4) angeordneten ersten Schraube (6) sowie in weiteren Bohrungen angeordneten weiteren Schrauben, welche parallel zu einer Spannelement-Längsachse (8) verlaufen, mit dem ersten Rad (2) und der zumindest einen Radsatzwelle (1) verspannt ist, **dadurch gekennzeichnet, dass** zumindest um die erste Schraube (6) zumindest eine erste Keilhülse (9) angeordnet ist.

2. Radsatz nach Anspruch 1, **dadurch gekennzeichnet, dass** das erste Spannelement (3) einen Rücksprung bezüglich einer Radnaben-Stirnseite (13) bildend auf der zumindest einen Radsatzwelle (1) angeordnet ist.

3. Radsatz nach Anspruch 1 oder 2, **dadurch gekennzeichnet, dass** das erste Spannelement (3) als integraler Teil des ersten Rads (2) ausgebildet ist.

4. Radsatz nach einem der Ansprüche 1 bis 3, **dadurch gekennzeichnet, dass** das erste Spannelement (3) und die zumindest eine Radsatzwelle (1) stirnseitig mittels einer lösbar mit der zumindest einen Radsatzwelle (1), mit dem ersten Rad (2) oder mit dem ersten Spannelement (3) verbundenen Endkappe (14) abgeschirmt sind.

5. Fahrwerk mit zumindest einem Radsatz nach einem der Ansprüche 1 bis 4.

## Claims

1. Wheelset for a rail vehicle, with at least one wheelset shaft (1) as well as with a first wheel (2) and a second wheel, wherein a first tensioning element (3), by means of which the first wheel (2) is detachably connected to the at least one wheelset shaft (1), is arranged at least between the first wheel (2) and the at least one wheelset shaft (1), wherein the first tensioning element (3) is tensioned against the first wheel (2) and the at least one wheelset shaft (1) by means of a first screw (6) arranged in a first bore hole (4) as well as further screws arranged in further bore holes, which run in parallel with a tensioning element longitudinal axis (8), **characterised in that** at least one first wedge sleeve (9) is arranged at least around the first screw (6).

2. Wheelset according to claim 1, **characterised in that** the first tensioning element (3) is arranged on the at least one wheelset shaft (1), forming a set-back area in relation to a wheel hub end face (13).

3. Wheelset according to claim 1 or 2, **characterised in that** the first tensioning element (3) is embodied as an integral part of the first wheel (2).

4. Wheelset according to one of claims 1 to 3, **characterised in that** the first tensioning element (3) and the at least one wheelset shaft (1) are shielded on the end face side by means of an end cap (14) that is detachably connected to the at least one wheelset shaft (1), to the first wheel (2) or to the first tensioning element (3).

5. Running gear with at least one wheelset according to one of claims 1 to 4.

## Revendications

1. Essieu monté pour un véhicule ferroviaire, comportant au moins un arbre d'essieu monté (1) ainsi qu'une première roue (2) et une seconde roue, dans lequel un premier élément de serrage (3) est disposé au moins entre la première roue (2) et l'au moins un arbre d'essieu monté (1), élément de serrage au moyen duquel la première roue (2) est reliée de manière amovible à l'au moins un arbre d'essieu monté (1), dans lequel le premier élément de serrage (3) est serré sur la première roue (2) et l'au moins un arbre d'essieu monté (1) au moyen d'une première vis (6) disposée dans un premier alésage (4) ainsi que d'autres vis disposées dans d'autres alésages, qui s'étendent parallèlement à un axe longitudinal (8) de l'élément de serrage, **caractérisé en ce qu'**au moins un premier manchon de serrage (9) est disposé au moins autour de la première vis (6).

2. Essieu monté selon la revendication 1, **caractérisé en ce que** le premier élément de serrage (3) est disposé sur l'au moins un arbre d'essieu monté (1) en formant un retrait par rapport à une face frontale de moyeu de roue (13).

3. Essieu monté selon la revendication 1 ou 2, **caractérisé en ce que** le premier élément de serrage (3) est conçu comme une partie intégrante de la première roue (2).

4. Essieu monté selon l'une des revendications 1 à 3, **caractérisé en ce que** le premier élément de serrage (3) et l'au moins un arbre d'essieu monté (1) sont protégés frontalement au moyen d'un capuchon d'extrémité (14) relié de manière amovible à l'au moins un arbre d'essieu monté (1), à la première roue (2) ou au premier élément de serrage (3).

5. Train roulant comportant au moins un essieu monté selon l'une des revendications 1 à 4.
